# EUROPÄISCHE PATENTANMELDUNG

(11) **EP 1 450 066 A2**
(43) Veröffentlichungstag der Anmeldung: **25.08.2004**
(21) Anmeldenummer: 04001143.9
(22) Anmeldetag: 21.01.2004
(51) Int. Cl.: F16F 9/05

(54) **Luftfeder für eine luftgefederte Fahrzeugachse sowie Tauchkolben für die Luftfeder einer luftgefederten Fahrzeugachse**

(30) Priorität: 08.02.2003 DE 10305280
(71) Anmelder: BPW Bergische Achsen KG, 51674 Wiehl (DE)
(72) Erfinder: Rhein, Bernd, 51491 Overath (DE)
(74) Vertreter: Christophersen & Partner

(57) **Zusammenfassung**

Vorgeschlagen wird eine Luftfeder für eine luftgefederte Fahrzeugachse sowie ein Tauchkolben für eine derartige Luftfeder. Ein beim Einfedern verformbarer Rollbalg (8) ist mit einem seiner beiden Enden an dem Tauchkolben (1) befestigt, auf dessen Mantelfläche (7) der Rollbalg (8) rollbar ist. Zur Erzielung einer in Fahrtrichtung schlankeren Bauweise der Luftfeder ist die Mantelfläche des Tauchkolbens (1) ebenso wie der Querschnitt des darauf abrollbaren Rollbalgs (8) unrund mit einem längeren (H_{T} bzw. H_{R}) und einem kürzeren (h_{T} bzw. h_{R}) Halbmesser. Vorzugsweise sind diese unrunden Querschnitte oval oder elliptisch.

## Beschreibung

Die Erfindung betrifft zunächst eine Luftfeder für eine luftgefederte Fahrzeugachse mit einem beim Einfedern verformbaren Rollbalg, der mit einem seiner beiden Enden an einem Tauchkolben befestigt ist, auf dessen Mantelfläche der Rollbalg abrollbar ist.

Ferner betrifft die Erfindung einen Tauchkolben für die Luftfeder einer luftgefederten Fahrzeugachse mit einer Mantelfläche, auf der ein Rollbalg der Luftfeder abrollbar ist.

Luftfedern bzw. Tauchkolben für Luftfedern der genannten Art sind in vielfältigen Ausführungsformen bekannt. Zum Einsatz kommen sie z. B. für Fahrzeugachsen von Nutzfahrzeugen, insbesondere Anhängerfahrzeugen oder Sattelaufliegern. Solche Fahrzeugachsen bestehen aus einem Achskörper, der, geführt durch Längslenker, beweglich am Fahrzeugrahmen angelenkt und gegenüber dem Fahrzeugrahmen durch die Luftfedern abgestützt ist. Zu jeder Luftfeder gehört ein sich beim Einfedern des Fahrzeuges verformender, luftgefüllter Rollbalg, vorzugsweise aus Gummi oder einem anderen flexiblen Material. Für die mechanische Kopplung zwischen dem Rollbalg einerseits und dem Achskörper bzw. dem Längslenker des Fahrzeuges andererseits ist der Rollbalg an einem Tauchkolben befestigt. Die äußere Mantelfläche des Tauchkolbens dient dem Rollbalg als Abroll- bzw. Abwälzfläche, so daß eine kontrollierte Bewegung des sich im Betrieb ausdehnenden und zusammenstauchenden Rollbalges gewährleistet ist. In fertigungstechnisch einfacher Weise sind sowohl der Rollbalg wie auch der teilweise in den Rollbalg eindringende Tauchkolben als bezüglich der zentralen Einfederachse rotationssymmetrische Teile ausgebildet. Die Luftfeder hat dadurch eine relativ bauchige Form mit relativ großer Breite. Diese Breite erweist sich als störend, wenn je nach Bauart der Fahrzeugachse nur noch ein geringer Abstand zwischen der Luftfeder bzw. deren Rollbalg und den Innenflächen der unmittelbar benachbart liegenden Fahrzeugräder oder anderen Teilen von Bremsen, Lenkung etc. verbleibt. Um dies zu vermeiden, wird die Luftfeder häufig nicht mittig auf dem Längslenker montiert, sondern in Bezug auf die Mitte des Längslenkers nochmals einwärts zur Fahrzeugmitte hin versetzt. In einer anderen Ausgestaltung ist es auch möglich, den Längslenker selbst in jenem Bereich, in dem die Luftfeder montiert ist, nach innen zu verkröpfen um auf diese Weise die Luftfeder näher zur Fahrzeugmitte hin anordnen zu können. Beide Alternativen sind jedoch konstruktiv und funktional unbefriedigend. Unbefriedigend sind sie auch deshalb, weil bei einer versetzten Anordnung der Luftfeder außermittige Abstützkräfte wirken, die unerwünscht sind.

Der Erfindung liegt daher die **Aufgabe** zugrunde, eine bessere Lösung für die durch die Baugröße der Luftfederbälge bedingten Bauraumprobleme bereitzustellen.

Zur **Lösung** dieser Aufgabe wird bei einer Luftfeder mit den eingangs genannten Merkmalen vorgeschlagen, daß die Mantelfläche des Tauchkolbens ebenso wie der Querschnitt des darauf abrollbaren Rollbalgs unrund mit einem längeren und einem kürzeren Halbmesser ist.

Vorgeschlagen wird daher eine Luftfeder, deren Tauchkolben sowie deren Rollbalg nicht rund und damit rotationssymmetrisch in Bezug auf die vertikale Einfederachse gestaltet ist, sondern länglich, z. B. nach Art eines Ovals oder einer Ellipse. Auf diese Weise läßt sich, in Fahrtrichtung betrachtet, eine schlankere Bauweise der Luftfeder erzielen, wodurch bei der Anordnung der Luftfeder auf dem Längslenker oder dem Achskörper der Fahrzeugachse ein Versatz der Luftfeder nach innen zur Fahrzeugmitte hin vermieden, zumindest aber reduziert werden kann.

Vorzugsweise sind nicht nur die Mantelfläche des Tauchkolbens und der Querschnitt des Rollbalgs unrund und vorzugsweise oval bzw. elliptisch gestaltet, sondern es wird auch jene Einspannung unrund mit einem längeren und einem kürzeren Halbmesser gestaltet, mit welcher der am Ende des Rollbalgs ausgebildete Rand an dem Tauchkolben festlegbar ist. Dies ermöglicht eine Bauweise, bei der der Rollbalg insgesamt, und nicht nur in seinem Abrollbereich, unrund gestaltet ist. Hierfür ist ferner von Vorteil, wenn das andere der beiden Enden des Rollbalgs druckdicht an einer Abschlußplatte befestigt ist, und auch diese Befestigung unrund mit einem längeren und einem kürzeren Halbmesser ist.

Mit einer vorteilhaften Ausgestaltung. der Luftfeder wird vorgeschlagen, daß das Material des Rollbalgs in den rechtwinklig zu dem einen der Halbmesser angeordneten Wandbereichen eine andere Biegefestigkeit aufweist, als in den rechtwinklig zu dem anderen der Halbmesser angeordneten Wandbereichen.

Mit einer weiteren Ausgestaltung wird vorgeschlagen, daß das Material des Rollbalgs in den rechtwinklig zu dem kürzeren Halbmesser angeordneten Wandbereichen dickwandiger und in den rechtwinklig zu dem längeren Halbmesser angeordneten Wandbereichen dünnwandiger ist.

Alternativ oder zusätzlich kann das Material des Rollbalgs in den rechtwinklig zu dem kürzeren Halbmesser angeordneten Wandbereichen mit die Biegefestigkeit des Wandmaterials erhöhenden Versteifungselementen versehen sein.

Zur **Lösung** der angegebenen Aufgabe wird erfindungsgemäß ferner ein Tauchkolben mit den eingangs genannten Merkmalen vorgeschlagen, wobei dieser Tauchkolben dadurch gekennzeichnet ist, daß die Mantelfläche unrund mit einem längeren und einem kürzeren Halbmesser ist.

Gemäß einer vorteilhaften Ausgestaltung dieses Tauchkolbens ist dieser mit einer Einspannung zur Festlegung des Rollbalgs versehen, wobei die Einspannung unrund mit einem längeren und einem kürzeren Halbmesser ist.

Weitere Einzelheiten und Vorteile der Erfindung ergeben sich aus der nachfolgenden Beschreibung unter Bezugnahme auf die Zeichnung. In den Zeichnungen zeigen:
- Fig. 1: in einer Schnittdarstellung eine zwischen einem Fahrzeugrahmen und einem Längslenker des Fahrwerkes angeordnete Luftfeder;
- Fig. 2: eine Draufsicht entsprechend der in Fig. 1 eingezeichneten Ansichtsebene II-II auf die obere Abschlußplatte der Luftfeder;
- Fig. 3: einen Schnitt durch die Luftfeder nach Fig. 1 entlang der in Fig. 1 eingetragenen Schnittebene III-III und
- Fig.4: eine der Fig. 3 entsprechende Schnittdarstellung, jedoch hier mit zusätzlichen Versteifungselementen im Wandmaterial des Rollbalgs.

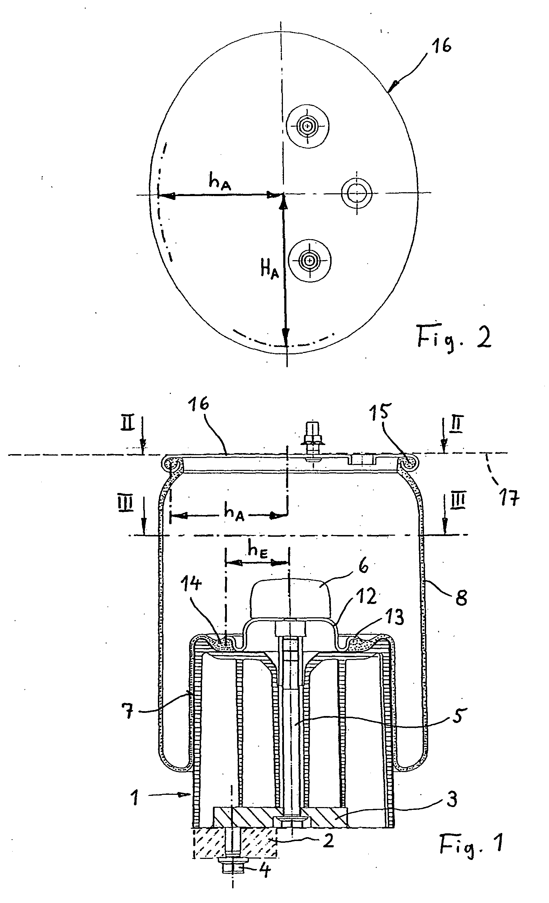

Fig. 1 zeigt eine Luftfeder mit Tauchkolben im Querschnitt. Der Tauchkolben 1 ist auf dem Längslenker 2 einer Fahrzeugachse und vorzugsweise einer Anhänger-Fahrzeugachse befestigt. Zur Befestigung des z. B. aus Kunststoff bestehenden Tauchkolbens 1 auf dem Längslenker 2 ist von unten in eine entsprechend gestaltete Ausnehmung im Kunststoffmaterial des Tauchkolbens 1 eine Halteplatte 3 aus Metall eingesetzt. Eine Verschraubung 4 legt diese Halteplatte 3 und damit den Tauchkolben 1 am Längslenker 2 fest. Von der Halteplatte 3 erstreckt sich ein zentraler Stützkörper 5 in Form eines Metallkerns bis zu einem Puffer 6 auf der Oberseite des Tauchkolbens 1. Stützkräfte, wie sie z. B. bei entlüfteter Luftfeder auftreten können, werden daher über den vorzugsweise aus Gummi oder Kautschuk bestehenden Puffer 6 und den sich starr verhaltenen zentralen Stützkörper 5 auf die Halteplatte 3 abgeführt. Der Tauchkolben 1 im übrigen ist daher von solchen Stützkräften entlastet. Seine Aufgabe besteht in erster Linie darin, eine äußere Mantelfläche 7 bereitzustellen, auf welcher ein Rollbalg 8 der Luftfeder kontrolliert abwälzen kann, um so dem Rollbalg 8 unabhängig von der Größe der Einfederung eine kontrollierte Einhaltung seiner Grundform zu ermöglichen. Fig. 1 läßt erkennen, daß der Rollbalg 8 hierbei mit seiner nach innen umgestülpten Außenseite auf der Mantelfläche 7 des Kunststoff-Tauchkolbens 1 aufliegt bzw. abrollt.

Zur Befestigung des unteren Endes des z. B. aus Kautschuk bestehenden Rollbalgs 8 an dem Tauchkolben 1 ist auf der Oberseite des Tauchkolbens 1 ein Deckel 12 angeordnet, dessen äußerer Rand 13 den wulstartig geformten Rand 14 des Rollbalgs 8 einspannt. Hierbei ist der wulstartige Rand 14 druckdicht zwischen dem Rand 13 des Deckels 12 und der Oberseite des Kunststoff-Tauchkolbenkörpers eingespannt. Der Deckel 12 stützt sich wiederum an dem zentral im Tauchkolbenkörper angeordneten Stützkörper 5 ab.

Auch das andere Ende des Rollbalges 8 ist als wulstartiger Rand 15 geformt. Der wulstartige Rand 15 ist druckfest in einer Abschlußplatte 16 fixiert, die von unten gegen den in Fig. 1 gestrichelt angedeuteten Fahrzeugrahmen, 17 des Fahrzeuganhängers oder gegen ein anderes Chassisteil des Fahrzeuganhängers abgestützt und in dieser Lage verschraubt ist.

Der Luftdruck in dem von dem Rollbalg 8 umschlossenen Volumen ist vorzugsweise steuerbar, um so eine Anpassung an Beladungssituationen, Fahrsituationen etc. vornehmen zu können.

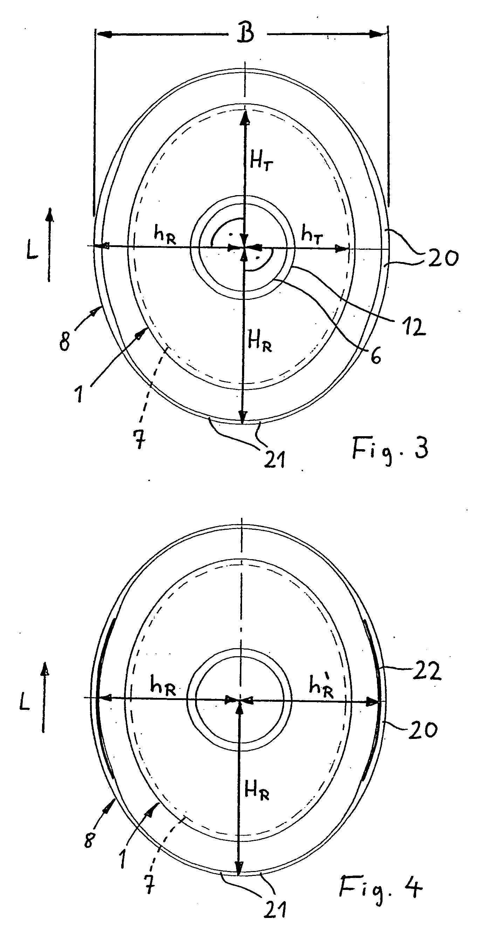

Insbesondere die horizontalen Schnittdarstellungen Fign. 3 und 4 lassen erkennen, daß die Luftfeder nicht rund gestaltet ist, sondern, in einer horizontalen Ebene betrachtet, leicht länglich ähnlich einer Ellipse oder einem Oval. Auf der Zeichnung ist als Ausführungsbeispiel eine eher elliptische Gestaltung dargestellt.

Die Schnittdarstellungen Fig. 3 und Fig. 4 lassen erkennen, daß bereits der Rollbalg 8 diesen unrunden Querschnitt aufweist. Der eine Halbmesser H_{R}, welcher sich beim Einsatz der Luftfeder in Fahrzeuglängsrichtung L erstreckt, ist länger, als ein hierzu um 90 Grad verdreht angeordneter, sich in Fahrzeugquerrichtung erstreckender Halbmesser h_{R}. Ferner möglich ist eine zusätzliche Asymmetrie in dem Sinne, daß der eine Halbmesser h_{R} in Fahrzeugquerrichtung ungleich ist dem anderen Halbmesser h_{R}' in Fahrzeugquerrichtung.

Bei dem dargestellten Ausführungsbeispiel ist H_{R} um den Faktor 1,25 größer als h_{R} und h_{R}'.

Entsprechend ist auch der Tauchkolben 1 bzw. dessen Mantelfläche 7 unrund und vorzugsweise elliptisch bzw. oval gestaltet. In Fig. 3 ist entsprechend der längere, sich in Fahrzeuglängsrichtung L erstreckende Halbmesser H_{T} der Mantelfläche 7 eingezeichnet, sowie der kürzere, sich in Fahrzeugquerrichtung erstreckende Halbmesser h_{T} der Tauchkolben-Mantelfläche.

Um dem elliptischen bzw. ovalen Rollbalg 8 eine kontrollierte Verformung beim Einfedern zu ermöglichen, kann auch die am Fahrzeugchassis befestigte Abschlußplatte eine entsprechende unrunde Gestaltung aufweisen. Fig. 2 läßt hierzu erkennen, daß der Befestigungs-Halbmesser für den wulstartigen Rand 15 des Rollbalgs in Fahrzeuglängsrichtung L einen größeren Wert H_{A} aufweist, als in Fahrzeugquerrichtung mit einem kleineren Wert h_{A}. Auch das Verhältnis von H_{A} zu h_{A} beträgt bei dem dargestellten Ausführungsbeispiel 1,25.

Von Vorteil bei der beschriebenen Luftfeder ist die, in Fahrtrichtung betrachtet, relativ geringe Breite B in Folge der in Fahrtrichtung schlanken Bauweise durch die geringere Breite als Länge der erfindungsgemäßen Luftfeder.

Gemäß Fig. 3 ist das Material des Rollbalgs 8 in den rechtwinklig zu dem kürzeren Halbmesser h_{R} angeordneten Wandbereichen 20 dickwandiger und in den rechtwinklig zu dem längeren Halbmesser H_{R} angeordneten Wandbereichen 21 dünnwandiger. Dies verbessert die kontrollierte Verformung des Rollbalgs beim Ein- und Ausfedern und hilft, die ovale Form des Rollbalgs zu wahren.

Zu demselben Zweck kann es von Vorteil sein, gemäß Fig. 4 in den rechtwinklig zu dem kürzeren Halbmesser h_{R} angeordneten Wandbereichen 20 Versteifungselemente 22 einzusetzen, z. B. eingebettet in das Kautschukmaterial des Rollbalgs. Auf diese Weise sind die sich im wesentlichen in Fahrtrichtung erstreckenden Wandbereiche 20 von größerer Biegesteifigkeit, als die sich im wesentlichen quer zur Fahrtrichtung erstreckenden Wandbereiche 21.

### Bezugszeichenliste

- 1: Tauchkolben
- 2: Längslenker
- 3: Halteplatte
- 4: Verschraubung
- 5: Stützkörper
- 6: Puffer
- 7: Mantelfläche des Tauchkolbens
- 8: Rollbalg
- 12: Deckel
- 13: Rand des Deckels
- 14: wulstartiges Ende, Rand
- 15: wulstartiger Rand
- 16: Abschlußplatte
- 17: Fahrzeugrahmen
- 20: Wandbereich
- 21: Wandbereich
- 22: Versteifungselement

- B: Breite der Luftfeder
- h_{A}: Halbmesser der Abschlußplatte
- H_{A}: Halbmesser der Abschlußplatte
- h_{E}: Halbmesser des Deckels
- h_{R}: Halbmesser des Rollbalgs
- h_{R}': Halbmesser des Rollbalgs
- H_{R}: Halbmesser des Rollbalgs
- h_{T}: Halbmesser des Tauchkolbens
- H_{T}: Halbmesser des Tauchkolbens
- L: Fahrzeuglängsrichtung

## Patentansprüche

1. Luftfeder für eine luftgefederte Fahrzeugachse mit einem beim Einfedern verformbaren Rollbalg (8), der mit einem seiner beiden Enden an einem Tauchkolben (1) befestigt ist, auf dessen Mantelfläche (7) der Rollbalg (8) abrollbar ist,
**dadurch gekennzeichnet,**
**daß** die Mantelfläche (7) des Tauchkolbens (1) ebenso wie der Querschnitt des darauf abrollbaren Rollbalgs (8) unrund mit einem längeren (H_{T} bzw. H_{R}) und einem kürzeren (h_{T} bzw. h_{R}) Halbmesser ist.

2. Luftfeder nach Anspruch 1, **dadurch gekennzeichnet, daß** die unrunden Querschnitte oval sind.

3. Luftfeder nach Anspruch 1, **dadurch gekennzeichnet, daß** die unrunden Querschnitte elliptisch sind.

4. Luftfeder nach einem der Ansprüche 1 bis 3, **dadurch gekennzeichnet, daß** der Tauchkolben (1) zur Festlegung des Rollbalgs (8) mit einer druckdichten Einspannung für einen am Ende des Rollbalgs (8) ausgebildeten Rand (14) versehen ist, und daß die Einspannung unrund mit einem längeren und einem kürzeren (h_{E}) Halbmesser ist.

5. Luftfeder nach einem der vorangehenden Ansprüche, **dadurch gekennzeichnet, daß** das andere der beiden Enden des Rollbalgs (8) druckdicht an einer Abschlußplatte (16) befestigt ist, und daß diese Befestigung unrund mit einem längeren (H_{A}) und einem kürzeren (h_{A}) Halbmesser ist.

6. Luftfeder nach einem der vorangehenden Ansprüche, **dadurch gekennzeichnet, daß** das Material des Rollbalgs (8) in den rechtwinklig zu dem einen der Halbmesser (h_{R}, H_{R}) angeordneten Wandbereichen eine andere Biegefestigkeit aufweist, als in den rechtwinklig zu dem anderen der Halbmesser (H_{R}, h_{R}) angeordneten Wandbereichen.

7. Luftfeder nach Anspruch 6, **dadurch gekennzeichnet, daß** das Material des Rollbalgs (8) in den rechtwinklig zu dem kürzeren Halbmesser (h_{R}) angeordneten Wandbereichen (20) dickwandiger und in den rechtwinklig zu dem längeren Halbmesser (H_{R}) angeordneten Wandbereichen (21) dünnwandiger ist.

8. Luftfeder nach Anspruch 6 oder Anspruch 7, **dadurch gekennzeichnet, daß** das Material des Rollbalgs (8) in den rechtwinklig zu dem kürzeren Halbmesser (h_{R}) angeordneten Wandbereichen (20) mit die Biegefestigkeit des Wandmaterials erhöhenden Versteifungselementen (22) versehen ist.

9. Tauchkolben für die Luftfeder einer luftgefederten Fahrzeugachse, mit einer Mantelfläche (7), auf der ein Rollbalg der Luftfeder abrollbar ist,
**dadurch gekennzeichnet,**
**daß** die Mantelfläche (7) unrund mit einem längeren (H_{T}) und einem kürzeren (h_{T}) Halbmesser ist.

10. Tauchkolben nach Anspruch 9, **dadurch gekennzeichnet, daß** dieser mit einer Einspannung zur Festlegung des Rollbalgs versehen ist, und daß die Einspannung unrund mit einem längeren und einem kürzeren (h_{E}) Halbmesser ist.
